# EUROPEAN PATENT APPLICATION

(11) **EP 4 769 110 A1**
(43) Date of publication of application: **01.07.2026**
(21) Application number: 24886041.3
(22) Date of filing: 30.09.2024
(51) Int. Cl.: G06F 3/06, G06F 11/07, G06F 11/30

(54) **DATA COLLECTION DEVICE AND OPERATING METHOD THEREOF**

(30) Priority: 01.11.2023 KR 20230149332
(71) Applicant: LG Energy Solution, Ltd., Seoul 07335 (KR)
(72) Inventor: JO, Jeong Jae, Daejeon 34122 (KR)
(74) Representative: Plasseraud IP
(86) International application number: PCT/KR2024/014834
(87) International publication number: WO 2025/095363

(57) **Abstract**

A data collection device according to an embodiment disclosed herein may include a data acquisition unit configured to acquire data from a vehicle, and a processor configured to determine a compression environment for compressing the data based on the type of data according to a state of the vehicle and compress and manage the data based on the compression environment.

## Description

### Technical Field

### CROSS-REFERENCE TO RELATED APPLICATION

This application claims priority to and the benefit of Korean Patent Application No. 10-2023-0149332 filed in the Korean Intellectual Property Office on November 1, 2023, the entire contents of which are incorporated herein by reference.

### TECHNICAL FIELD

Embodiments disclosed herein relate to a data collection device and a method of operating the same.

### Background Art

Recently, research and development on secondary batteries has been actively conducted. A secondary battery is a battery capable of charging and discharging and includes all recent lithium ion batteries in addition to conventional Ni/Cd batteries and Ni/MH batteries. The lithium-ion batteries have an advantage of having a much higher energy density than the conventional Ni/Cd batteries, the Ni/MH batteries, etc. In addition, since the small and light-weight lithium ion batteries may be manufactured, the lithium ion batteries are used as a power source for mobile devices, and recently, the lithium ion batteries are attracting attention as a next-generation energy storage medium due to the expansion of the range of use to a power source for electric vehicles.

A separate data collection device may be used for analyzing a state of a battery. The data collection device may be connected to a battery or a battery pack including the battery to collect data on a state of the battery and transmit the collected data to a server so that the state of the battery may be analyzed.

In addition, a data collection device for a vehicle may be connected to a vehicle network (controller area network (CAN)) to collect data from various controllers and transmit the data to the server. The vehicle network (CAN) is a bus method for communication between microcontrollers and performs data communication with an electronic control unit (ECU), a transmission control unit (TCU), an anti-lock brake system (ABS) microcontroller, etc. of the vehicle.

Due to the recent popularization of the data collection device for a vehicle, the amount of data collected through the data collection device for a vehicle may rapidly increase. Therefore, the communication cost and server storage cost for transmitting the data collected by the data collection device for a vehicle to the server may also increase. Therefore, there is a need to manage the collected data to reduce the communication cost and server storage cost.

### Disclosure

### Technical Problem

Embodiments disclosed herein are directed to providing a data collection device and a method of operating the same, in which a method of managing data is provided to efficiently use a storage space of a data collection device.

Embodiments disclosed herein are also directed to providing a data collection device and a method of operating the same, in which a method of managing data is provided to efficiently perform communication between a data collection device and a server.

The technical objects of the embodiments disclosed herein are not limited to the above-described technical objects, and other objects that are not described will be able to be clearly understood by those skilled in the art from the following descriptions.

### Technical Solution

A data collection device according to an embodiment disclosed herein may include a data acquisition unit configured to acquire data from a vehicle, and a processor configured to determine a compression environment for compressing the data based on the type of data according to a state of the vehicle and compress and manage the data based on the compression environment.

According to an embodiment, the processor may determine the type of data based on whether the data is data acquired in a charging state or a driving state of the vehicle.

According to an embodiment, the processor may change one or more compression parameters used for compressing the data based on the type of data and determine the compression environment.

According to an embodiment, the processor may change window bits and a memory level among the one or more compression parameters.

According to an embodiment, the processor may change the compression parameter so that a compression rate of the data is 90% or more.

According to an embodiment, the processor may compress the data in a streaming manner.

According to an embodiment, the processor may pack the data every predetermined size while streaming the data and compress the packed data.

According to an embodiment, the data collection device may further include a memory configured to store the data, and a communication module including a storage configured to store the compressed data.

A method of collecting data according to an embodiment disclosed herein may include acquiring data from a vehicle, determining a compression environment for compressing the data based on the type of data according to a state of the vehicle, and compressing and managing the data based on the compression environment.

According to an embodiment, the determining of the compression environment may include determining the type of data based on whether the data is data acquired in a charging state or a driving state of the vehicle.

According to an embodiment, the determining of the compression environment may include changing one or more compression parameters used for compressing the data based on the type of data.

According to an embodiment, the changing of the one or more compression parameters may include changing window bits and a memory level among the one or more compression parameters.

According to an embodiment, the changing of the compression parameter may include changing the compression parameter so that a compression rate of the data is 90% or more.

According to an embodiment, the compressing and managing of the data may include compressing the data in a streaming manner.

According to an embodiment, the compressing of the data in a streaming manner may include packing the data every predetermined size while streaming the data, and compressing the packed data.

According to an embodiment, the method may further include storing the compressed data in a memory or a storage of a communication module.

### Advantageous Effects

According to the data collection device and the method of operating the same according to the embodiments disclosed herein, data can be used to efficiently use the storage space of the data collection device.

According to the data collection device and the method of operating the same according to the embodiments disclosed herein, data can be managed to efficiently perform communication between the data collection device and the server.

In addition, various effects that may be directly or indirectly identified through the present document can be provided.

### Description of Drawings

FIG. 1 is a block diagram showing a data collection system according to one embodiment disclosed herein.
FIG. 2 is a block diagram showing a data collection device according to one embodiment disclosed herein.
FIG. 3 is a flowchart of an operation of the data collection device according to one embodiment disclosed herein.
FIG. 4 is a flowchart of an operation of the data collection device according to one embodiment disclosed herein.
FIG. 5 is a block diagram showing a hardware configuration of a computing system for performing a method of operating a data collection device according to one embodiment disclosed herein.

### Mode for Invention

Hereinafter, various embodiments of the present disclosure will be described with reference to the accompanying drawings. However, it should be understood that this is not intended to limit the present disclosure to specific embodiments and includes various modifications, equivalents, and/or alternatives of the embodiments of the present disclosure.

It should be understood that various embodiments of the present document and the terms used herein are not intended to limit the technical features described herein to specific embodiments and include various modifications, equivalents, or substitutes of the corresponding embodiments. In the description of the drawings, similar reference numerals may be used for similar or related components. The singular form of a noun corresponding to an item may include one item or a plurality of items unless the relevant context clearly dictates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," "second," "A," "B," "(a)," or "(b)" may simply be used to distinguish the corresponding component from another and do not limit the corresponding components in another aspect (e.g., importance or order).

In the present document, when a certain (e.g., a first) component is described as being "connected," "coupled," or "joined or "coupled" or "connected" to another (e.g., a second) component with or without the terms "functionally" or "communicatively," this means that the certain component may be connected to another component directly (e.g., by wire), wirelessly, or through a third component.

According to one embodiment, a method according to various embodiments disclosed herein may be provided by being included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through an application store or directly online between two user devices. In the case of the online distribution, at least some of the computer program products may be at least temporarily stored or temporarily generated in a device-readable storage medium such as a memory of a server of a manufacturer, a server of an application store, or a relay server.

According to various embodiments, each component (e.g., a module or a program) of the above-described components may include a single object or a plurality of objects, and some of the plurality of objects may be separately disposed in another component. According to various embodiments, one or more of the above-described corresponding components or their operations may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

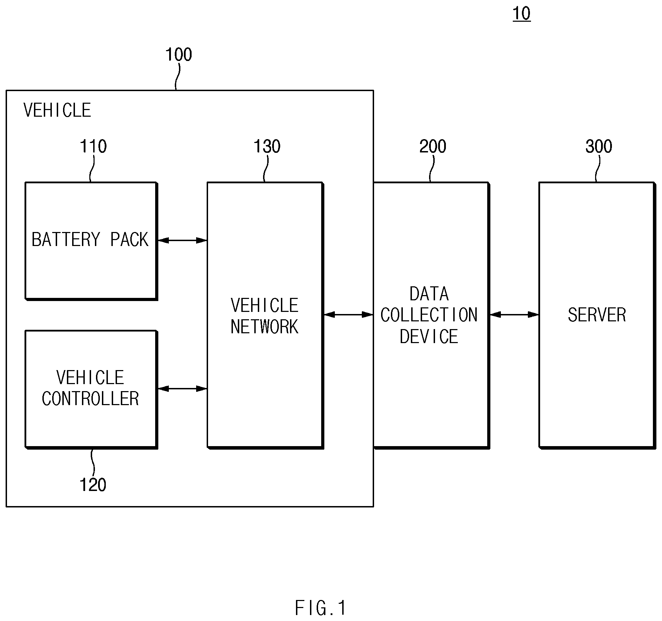

FIG. 1 is a block diagram showing a data collection system according to one embodiment disclosed herein.

Referring to FIG. 1, a data collection system 10 according to one embodiment of the present disclosure may include a vehicle 100, a data collection device 200, and a server 300.

The vehicle 100 may be an electric vehicle (EV) that receives a driving force from a battery for storing electricity, but the scope of the present disclosure is not limited thereto, and the technical idea of the present disclosure may be applied to other electric transportation means (e.g., electric scooters) rather than the vehicle 100.

The vehicle 100 may include a battery pack 110, a vehicle controller 120, and a vehicle network 130.

The battery pack 110 may include a battery (not shown) for storing electricity required for driving the vehicle 100 and a battery management system (BMS) (not shown) for controlling the operation of the battery. Here, the BMS may control and/or manage the charging and discharging of the battery. In addition, according to an embodiment, the BMS may generate battery data on a state of the battery. For example, the BMS may transmit, to the vehicle network 130, battery data including at least one of data (e.g., a voltage, current, resistance, and temperature of a battery cell) acquired by sensing the battery and data (e.g., a state of charge (SOC) and a state of health (SOH)) generated by processing the acquired data.

The vehicle controller 120 may control the operation and/or function of the vehicle 100 and generate vehicle data. According to an embodiment, the vehicle controller 120 may control the operation of the vehicle 100 by controlling at least one sensor (e.g., a radar sensor or a temperature sensor) and at least one control device (e.g., a driving device, a braking device, a steering device, an automated driving system (ADS), a telematics multimedia system (TMS)) provided in the vehicle 100 in addition to the battery pack 110. According to an embodiment, the vehicle controller 120 may be an ECU for controlling some components of the vehicle 100.

According to an embodiment, the vehicle data may have a CAN message format. The vehicle data may include state values, state change values, output signal values, etc. of components included in the vehicle 100.

In addition, the vehicle controller 120 may store vehicle identification information that is unique to the vehicle 100 and transmit the vehicle identification information in response to the request from an external source (e.g., the data collection device 200). According to an embodiment, the vehicle identification information may include a vehicle identification number (VIN). The vehicle controller 120 may communicate with other devices positioned inside or outside the vehicle 100 through the vehicle network 130.

The vehicle network 130 may provide a communication environment in which components inside the vehicle 100 may transmit and receive data. The vehicle network 130 may be a CAN in which the components inside the vehicle 100 may be connected in parallel to communicate with each other without a host, but the scope of the present disclosure is not limited thereto. According to an embodiment, the vehicle network 130 may allow the connection of an external device (e.g., the data collection device 200) to provide an environment in which the external device may communicate with another device (e.g., the battery pack 110) through the vehicle network 130.

The data collection device 200 may collect data from the vehicle 100 and transmit the collected data to the server 300. According to an embodiment, the data collection device 200 may collect data from the battery pack 110 and/or the vehicle controller 120 of the vehicle 100. According to an embodiment, the data collection device 200 may be formed integrally with the vehicle 100 and implemented as a separate device and connected to the vehicle 100 through an external connection means.

According to an embodiment, the data collection device 200 is a device that may be mounted on the vehicle 100 and connected to the vehicle network 130, for example, may be an on-board diagnostics (OBD) device connected to an OBD port provided on the vehicle 100. The data collection device 200 may be connected to the vehicle network 130 to transmit and receive unified diagnostic service (UDS) data to acquire data on the state of the vehicle 100 from components in the vehicle 100. Here, the data on the state of the vehicle 100 may include speed data, traveling distance data, traveling time data, traveling position data, and battery data of the vehicle 100.

According to an embodiment, the data collection device 200 may transmit data on the vehicle 100 to the server 300. The data collection device 200 may transmit data to the server 300 through any wireless communication method. For example, the data collection device 200 may transmit data to the server 300 via a Long-Term Evolution (LTE) communication method.

According to an embodiment, the data collection device 200 may transmit the collected data to the server 300 in various ways. For example, the data collection device 200 may transmit original data of the collected data or transmit data that has processed and/or processed the collected data.

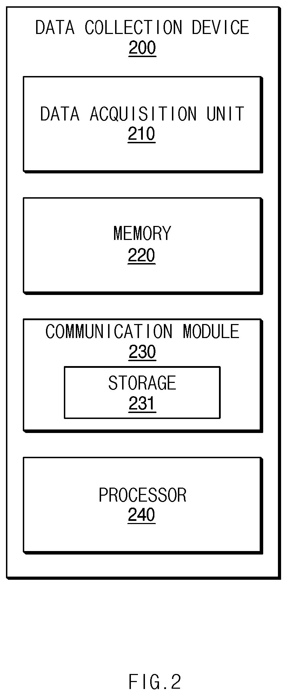

However, due to the recent popularization of the data collection device 200 mounted on the vehicle 100 and the development of the data collection device 200, the amount of data collected by the data collection device 200 is increasing. Therefore, the communication cost and the amount of communication for transmitting the data collected by the data collection device 200 to the server 300 may increase. In addition, the storage space and the storage cost for storing the data in the data collection device 200 and the server 300 may also increase. Therefore, to reduce the communication cost and the storage cost, it is essential for the data collection device 200 to manage the collected data, and to this end, the operation of the data collection device 200 may be described with reference to FIG. 2.

According to an embodiment, the server 300 may transmit and receive data with the data collection device 200. Therefore, the server 300 may receive data on the vehicle 100 from the data collection device 200 and store and analyze the data to provide a management service for the vehicle 100 or the battery pack 110.

The server 300 may acquire the data on the vehicle 100 from the data collection device 200. Here, the server 300 may store the acquired data in a database. The data stored in the database may be used to analyze and/or manage the state of the vehicle 100.

The server 300 may preset data to be collected through the data collection device 200 and manage the data collection device 200. For example, before the data collection device 200 collects data from the vehicle 100, the server 300 may select a target (e.g., the battery pack 110 and/or the vehicle controller 120) from which data is collected and set and transmit data items to be collected from the selected target and a collection cycle to the data collection device 200.

FIG. 2 is a block diagram showing a data collection device according to one embodiment disclosed herein.

Referring to FIG. 2, the data collection device 200 may include a data acquisition unit 210, a memory 220, a communication module 230, and a processor 240. However, the present disclosure is not limited thereto, and some components may be omitted from the data collection device 200, or other general-purpose components may be further included in the data collection device 200. The following description of FIG. 2 may be described with reference to FIG. 1.

The data acquisition unit 210 may be connected to the vehicle network 130 to acquire and/or collect data from the internal components (e.g., the battery pack 110 and the vehicle controller 120) of the vehicle 100. Here, the data acquired from the vehicle 100 may be referred to as original data. According to an embodiment, the data acquisition unit 210 may acquire data from the vehicle 100 every unit time. For example, the data acquisition unit 210 may collect data continuously or collect data at different collection cycles depending on the data items.

The memory 220 may store data (i.e., original data) received from the vehicle 100. For example, the memory 220 may store speed data, traveling distance data, traveling time data, traveling position data, and battery data of the vehicle 100. In addition, the memory 220 may store data collection setting information received from the server 300.

According to an embodiment, the memory 220 may divide the original data acquired from the data acquisition unit 210 into a plurality of data files and store the data files. According to an embodiment, the memory 220 may divide the original data into 5-minute files and store the 5-minute files.

According to an embodiment, the memory 220 may store data used by at least one component (e.g., the data acquisition unit 210, the communication module 230, and the processor 240) of the data collection device 200. For example, the data may include software (or instruction related thereto), input data, or output data. According to an embodiment, when executed by the processor 240, the instructions may cause the data collection device 200 to perform operations defined by the instructions.

According to an embodiment, the memory 220 may include a volatile memory and/or a nonvolatile memory. Here, the memory 220 may include at least one storage medium among a flash memory type, hard disk type, multimedia card micro type, card type memory (e.g., an SD or XD memory), a magnetic memory, a magnetic disk, an optical disk, a random access memory (RAM), a static RAM (SRAM), a read-only memory (ROM), a programmable ROM (PROM), and an electrically erasable PROM (EEPROM).

The communication module 230 may establish a wireless communication channel between the data collection device 200 and the server 300 and transmit and receive data with the server 300 through the established communication channel. For example, the communication module 230 may transmit and receive data with another device based on at least one radio access technology (RAT). Here, the RAT may include 3G (WCDMA, HSDPA, etc.), 4G (LTE, etc.), and 5G. According to an embodiment, the communication module 230 may include a module that supports wireless Internet access, such as wireless LAN (WLAN), Wibro, Wi-Fi, WiMAX, or HSDPA.

In addition, the communication module 230 may transmit and receive data with the internal components (the battery pack 110, the vehicle controller 120, etc.) of the vehicle 100 connected through the vehicle network 130.

According to an embodiment, the communication module 230 may include a storage 231. Here, the storage 231 may be a storage space different from the memory 220. For example, the storage 231 may be a RAM storage of the communication module 230. According to an embodiment, the communication module 230 may transmit the data stored in the storage 231 to the server 300.

The processor 240 may manage and/or control the operation and/or state of the data collection device 200. According to an embodiment, the processor 240 may control the data collection device 200 to perform the operation of the data collection device 200 described with reference to FIG. 1. In addition, the processor 240 may process various data and/or signals necessary for performing the operation of the data collection device 200.

According to an embodiment, the processor 240 may compress and manage the data acquired from the vehicle 100. Here, the processor 240 may compress the data through any compression algorithm. For example, the processor 240 may use a compression algorithm including a ZLIB compression library. When the processor 240 uses the ZLIB compression library, data may be compressed at a high speed minimally using the memory 220.

According to an embodiment, the processor 240 may determine a compression environment for compressing data based on the type of data. Here, the processor 240 may determine the type of data based on the state of the vehicle 100.

For example, the processor 240 may determine the type of data based on whether the data is data acquired in a charging state or a driving (or discharging) state of the vehicle 100. In addition, for example, the processor 240 may determine the type of data based on whether the data is data acquired in a high-speed driving state (e.g., the speed is 70 km/h or higher), a medium-speed driving state (e.g., the speed ranges from 30 to 70 km/h), or a low-speed driving state (e.g., the speed ranges from 0 to 30 km/h) of the vehicle 100. The type of data is not limited to the above-described embodiment, and the processor 240 may classify the type of data based on various operating states of the vehicle 100.

According to various embodiments, the properties of the data may vary depending on the state of the vehicle 100. For example, when the vehicle 100 is in the charging state, voltage data of the vehicle 100 may increase steadily. However, when the vehicle 100 is in the driving (or discharging) state, the voltage data of the vehicle 100 may fluctuate more greatly and more often. That is, the data acquired in the driving state may have an irregular data pattern compared to the data acquired in the charging state. Therefore, when the processor 240 compresses the data acquired in the driving state and the data acquired in the charging state to the same compression environment, there may be a problem in which a compression rate of the data acquired in the driving state is lowered. Here, the compression rate may be a rate of the size of the compressed data to the size of the original data. Therefore, the processor 240 may determine the type of data that reflects the properties of the data according to the state of the vehicle 100. Therefore, the processor 240 may optimize the compression environment according to the type of data and increase the compression rate.

According to an embodiment, the processor 240 may check the state of the vehicle 100 at the time point when the data is acquired through a CAN UDS message acquired from the vehicle network 130. In addition, the processor 240 may add an identifier to the data according to the state of the vehicle 100 to distinguish the type of data. For example, the processor 240 may add an identifier related to the state of the vehicle 100 to the file name of the data file to distinguish the type of data. Therefore, the processor 240 may simply distinguish the type of data through the identifier of the data.

According to an embodiment, the processor 240 may determine a compression environment based on the type of data. Here, the compression environment may mean a method for compressing data. For example, the compression environment may include the type of compression algorithm, parameters used in each compression algorithm, the size, number, etc. of data to be compressed. The processor 240 may determine an appropriate compression environment to increase the compression rate according to the type of data.

According to an embodiment, the processor 240 may change one or more compression parameters used for compressing data to determine the compression environment. In another aspect, the processor 240 may dynamically adopt the compression parameter according to the type of data. Here, the compression parameter may vary depending on the compression algorithm. For example, in the case of a compression algorithm using the ZLIB compression library, the compression parameter may include at least one of a compression level, window bits, and a memory level. According to an embodiment, the processor 240 may change the window bits and memory level among one or more compression parameters based on the type of data.

According to an embodiment, the processor 240 may determine the compression environment so that the compression rate of the data is 90% or more. Here, the compression rate may be a rate of the size of the compressed data to the size of the original data. According to an embodiment, the processor 240 may change the compression parameter according to the type of data so that the compression rate of the data is 90% or more. Preferably, the processor 240 may change the compression parameter so that the compression rate of the data is 93% or more. Therefore, the processor 240 may reduce the volume of data transmitted from the data collection device 200 to the server 300 by about 90% or more.

According to an embodiment, the processor 240 may change the compression parameter of the data acquired in the driving state to be greater than the compression parameter of the data acquired in the charging state. In another aspect, the processor 240 can achieve a high compression rate by changing the compression parameter according to the properties of the data.

According to an embodiment, the processor 240 may change the compression parameter related to the memory used in the compression process according to the type of data. Here, the compression parameter related to the memory may be the memory level. In addition, the memory used in the compression process may be the memory 220 of the data collection device 200. For example, the processor 240 may change the compression parameter in consideration of the maximum memory level and the minimum memory level required to achieve a predetermined compression rate.

According to an embodiment, when compressing the data acquired in the charging state, the processor 240 may change the compression parameter to use the minimum memory level in the compression process. Here, the data acquired in the charging state may have a regular (or simple) data pattern. Therefore, the processor 240 may set the window bits to 12 and the memory level to the minimum memory level (e.g., 4) and compress the data acquired in the charging state.

In contrast, when compressing the data acquired in the driving state, the processor 240 may change the compression parameter to use the maximum memory level in the compression process. Here, the data acquired in the driving state may have an irregular data pattern. Therefore, the processor 240 may change and set the window bits to 14 and the memory level to the maximum memory level (e.g., 6) and compress the data acquired in the driving state. Therefore, the processor 240 may determine an appropriate compression parameter for each type of data, thereby optimizing compression performance.

According to an embodiment, the processor 240 may change the compression parameter according to the type of data to compress data with the irregular pattern to a greater compression parameter and data with the regular pattern to a smaller compression parameter. Here, the greater compression parameter may mean that a compression algorithm is calculated using more calculations to increase the compression rate of the data.

As described above, the data acquired in the driving state may have an irregular data pattern compared to the data acquired in the charging state. Therefore, the data acquired in the driving state may have a lower compression rate than the data acquired in the charging state. Therefore, the processor 240 may change the compression parameter to secure compression rates of different types of data at similar levels. Therefore, the processor 240 can increase the compression rate of the data with the irregular pattern and save the communication cost and storage space.

According to an embodiment, the processor 240 may compress data in a streaming manner. Here, the streaming manner may be a method of reading and compressing data to be compressed in real time. Therefore, the processor 240 may sequentially process data in the time domain without downloading the entire large-capacity original data (i.e., data acquired from the vehicle 100).

According to an embodiment, the processor 240 may compress the data acquired for a predetermined time in a streaming manner for each predetermined size. In another aspect, the processor 240 may pack data every predetermined size while streaming data and compress the packed data. Here, the data packing may mean dividing data into small units and managing the divided data. For example, the processor 240 may compress 5-minute data acquired from the vehicle 100 in a streaming manner every 16 KB unit. Therefore, the processor 240 may divide the large-capacity data into small units in the time domain and compress and manage the divided data.

According to an embodiment, the processor 240 may compress data in a streaming manner using one or more buffers. For example, the processor 240 may compress the original data in a streaming manner using an input buffer and an output buffer. According to an embodiment, the processor 240 may pack an original file (extension name: asc) to a predetermined size (e.g., 16 KB) and then copy the packed data to the input buffer. In addition, the processor 240 may compress the data in the input buffer and copy the compressed data to the output buffer. Here, the processor 240 may check whether an error occurs in compression. When it is confirmed that no error occurs, the processor 240 may store the compressed data from the output buffer as a compressed file (extension name: ZLIB).

According to an embodiment, the processor 240 may store the compressed data in the memory 220 or the storage 231 of the communication module 230. Here, the compressed data may be data of which capacity is reduced to about 1/10 compared to the original data. Therefore, the processor 240 may store the compressed data, which has been compressed with a smaller number of calculations than storing the original data, in the memory 220 or the storage 231. Therefore, the processor 240 may stabilize the load of an embedded system and increase a processing speed. In addition, the processor 240 may transmit the compressed data from the data collection device 200 to the server 300 to reduce the communication cost with the server 300 by about 90%.

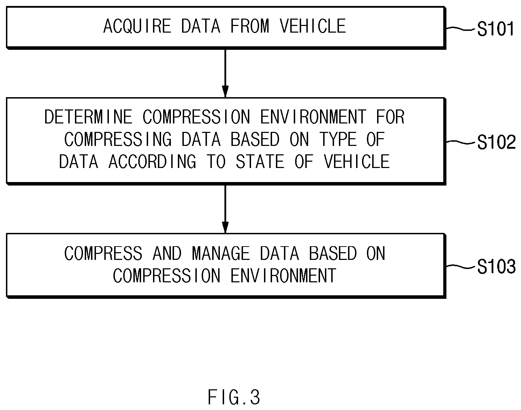

FIG. 3 is a flowchart of an operation of the data collection device according to one embodiment disclosed herein.

Referring to FIG. 3, the data collection device 200 may acquire data from a vehicle (S101), determine a compression environment for compressing the data based on the type of data according to a state of the vehicle (S102), and compress and manage the data based on the compression environment (S103).

In operation S101, the processor 240 of the data collection device 200 may acquire data from the vehicle 100 (S101). Here, the data acquired from the vehicle 100 may be referred to as original data.

In operation S102, the processor 240 of the data collection device 200 may determine a compression environment for compressing the data based on the type of data according to the state of the vehicle 100 (S102).

In operation S103, the processor 240 of the data collection device 200 may compress and manage the data based on the compression environment (S103).

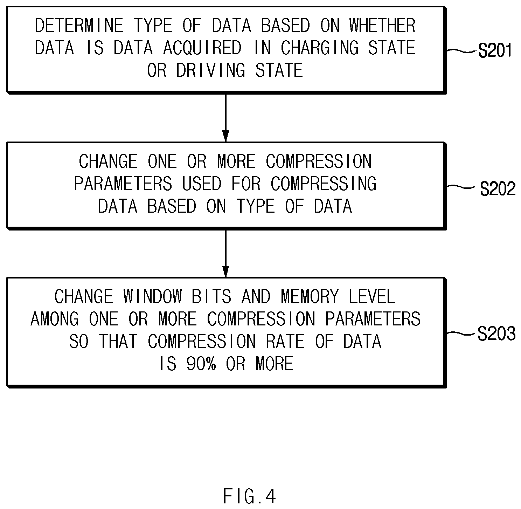

FIG. 4 is a flowchart of an operation of the data collection device according to one embodiment disclosed herein.

Referring to FIG. 4, the data collection device 200 may determine the type of data based on whether data is data acquired in a charging state or a driving state (S201), change one or more compression parameters used to compress the data based on the type of data (S202), and change window bits and a memory level among the one or more compression parameters so that a compression rate of the data is 90% or more (S203).

In operation S201, the processor 240 of the data collection device 200 may determine the type of data based on whether data is data acquired in a charging state or a driving state (S201).

In operation S202, the processor 240 may change one or more compression parameters used to compress the data based on the type of data (S202).

In operation S203, the processor 240 may change window bits and a memory level among the one or more compression parameters so that the compression rate of the data is 90% or more (S203).

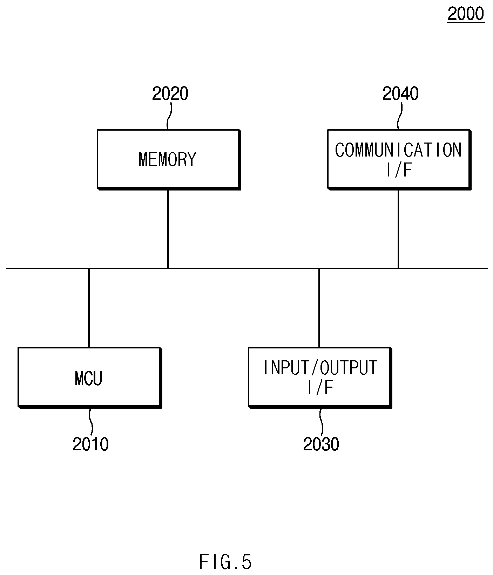

FIG. 5 is a block diagram showing a hardware configuration of a computing system for performing a method of operating a data collection device according to one embodiment disclosed herein.

Referring to FIG. 5, a computing system 2000 according to one embodiment disclosed herein may include a micro controller unit (MCU) 2010, a memory 2020, an input/output I/F 2030, and a communication I/F 2040.

The MCU 2010 may execute various programs (e.g., a vehicle data collection program, a potential variable extraction program, and a compression program) stored in the memory 2020, process various pieces of information including data on the vehicle 100 through these programs, and perform functions of the processor 240 included in the data collection device 200 shown in FIGS. 1 to 4.

The memory 2020 may store various programs such as a vehicle data collection program, a potential variable extraction program, and a compression program. In addition, the memory 2020 may store various pieces of information including the data on the vehicle 100, etc.

A plurality of memories 2020 may be provided as needed. The memory 2020 may be a volatile memory or a non-volatile memory. As the memory 2020 of the volatile memory, a RAM, a DRAM, a SRAM, etc. can be used. As the memory 2020 of the non-volatile memory, a ROM, a PROM, an EAROM, an EPROM, an EEPROM, a flash memory, etc. can be used. For example, the memory 2020 may include an SD card. Examples of the above-listed memories 2020 are merely illustrative and are not limited to these examples.

The input/output I/F 2030 may be an interface for connecting an input device (not shown), such as a keyboard, a mouse, or a touch panel, and an output device, such as a display (not shown) with the MCU 2010 and allowing the input and output devices and the MCU 2010 to transmit and receive data.

The communication I/F 2040 is a component capable of transmitting and receiving various data to and from the server and may be various devices capable of supporting wired or wireless communication. For example, the data collection device 200 may transmit and receive various pieces of information including SOC, OCV, parameters, etc. of the battery cell from a separately provided external server through the communication I/F 2040.

As described above, the computer program according to one embodiment disclosed herein may be implemented as a module for performing the functions shown in FIG. 2, for example, by being recorded in the memory 2020 and processed by the MCU 2010.

As described above, although all the components constituting the embodiments disclosed herein were described as being coupled or operated by being coupled, the embodiments disclosed herein are not necessarily limited to these embodiments. In other words, one or more of all the components may be operated by being selectively coupled without departing from the scope of the purpose of the embodiments disclosed herein.

In addition, the terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

The above-described disclosure schematically describes the features of several embodiments so that those skilled in the art may better understand the aspects of the present disclosure. Those skilled in the art will readily appreciate that the present disclosure may be used as a basis for designing or modifying other structures to perform the same purpose or achieve the same advantage of the embodiments introduced herein. Furthermore, those skilled in the art will recognize that such equivalent configurations do not depart from the scope of the present disclosure, and various changes, substitutions, and modifications can be made herein without departing from the scope of the present disclosure.

## Claims

1. A data collection device comprising:
a data acquisition unit configured to acquire data from a vehicle; and
a processor configured to determine a compression environment for compressing the data based on a type of the data according to a state of the vehicle and compress and manage the data based on the compression environment.

2. The data collection device of claim 1, wherein the processor determines the type of the data based on whether the data is data acquired in a charging state or a driving state of the vehicle.

3. The data collection device of claim 1, wherein the processor changes one or more compression parameters used for compressing the data based on the type of the data and determines the compression environment.

4. The data collection device of claim 3, wherein the processor changes window bits and a memory level among the one or more compression parameters.

5. The data collection device of claim 3, wherein the processor changes the compression parameter so that a compression rate of the data is 90% or more.

6. The data collection device of claim 1, wherein the processor compresses the data in a streaming manner.

7. The data collection device of claim 6, wherein the processor packs the data every predetermined size while streaming the data and compresses the packed data.

8. The data collection device of claim 1, further comprising:
a memory configured to store the data; and
a communication module including a storage configured to store the compressed data.

9. A method of collecting data, comprising:
acquiring data from a vehicle;
determining a compression environment for compressing the data based on a type of the data according to a state of the vehicle; and
compressing and managing the data based on the compression environment.

10. The method of claim 9, wherein the determining of the compression environment includes determining the type of the data based on whether the data is data acquired in a charging state or a driving state of the vehicle.

11. The method of claim 9, wherein the determining of the compression environment includes changing one or more compression parameters used for compressing the data based on the type of the data.

12. The method of claim 11, wherein the changing of the one or more compression parameters includes changing window bits and a memory level among the one or more compression parameters.

13. The method of claim 11, wherein the changing of the compression parameter includes changing the compression parameter so that a compression rate of the data is 90% or more.

14. The method of claim 9, wherein the compressing and managing of the data includes compressing the data in a streaming manner.

15. The method of claim 14, wherein the compressing of the data in a streaming manner includes:
packing the data every predetermined size while streaming the data; and
compressing the packed data.

16. The method of claim 9, further comprising storing the compressed data in a memory or a storage of a communication module.
